# FASCICULE DE BREVET EUROPEEN

(11) **EP 3 490 829 B1**
(45) Date de publication et mention de la délivrance du brevet: **24.06.2020**
(21) Numéro de dépôt: 17757690.7
(22) Date de dépôt: 28.07.2017
(51) Int. Cl.: B60J 7/02

(54) **PAVILLON VITRE A PANNEAU MOBILE A PENE DE SOLIDARISATION MOBILE EN DIRECTION LATÉRALE.**
GLASDACH MIT MOBILEM PANEEL MIT Y-FÖRMIGEM MOBILEM BEFESTIGUNGSBOLZEN
GLAZED ROOF WITH MOBILE PANEL HAVING A Y-SHAPED MOBILE SECURING BOLT

(30) Priorité: 28.07.2016 FR 1657331; 05.09.2016 FR 1658247
(43) Date de publication de la demande: 05.06.2019
(73) Titulaire: Advanced Comfort Systems France SAS - ACS France, 79302 Bressuire Cedex (FR)
(72) Inventeur: DESBOIS, Mickaël, 44120 Vertou (FR)
(74) Mandataire: Vidon Brevets & Stratégie
(86) Numéro de dépôt international: PCT/EP2017/069230
(87) Numéro de publication internationale: WO 2018/020033

(56) Documents cités:
- EP-A2- 0 296 644
- DE-C1- 3 818 476
- US-A1- 2015 048 655

## Description

### 1. Domaine de l'invention

Le domaine de l'invention est celui des baies vitrées pour véhicules automobiles, et plus précisément pour les pavillons de tels véhicules.

Plus précisément, l'invention concerne les pavillons vitrés comprenant au moins une ouverture, coopérant avec un panneau vitré mobile coulissant, et en particulier les dispositifs connus sous le nom de « baie flush », ou « toit ouvrant flush », conçus pour être montés de façon affleurante (ou quasi affleurante) avec la carrosserie.

Dans le cadre de la présente demande de brevet, on entend par le terme « panneau vitré » tout panneau, fixe ou mobile par rapport à la carrosserie, substantiellement transparent ou translucide, participant au clair de baie. Un tel panneau peut être réalisé en verre ou en tout autre matériau adapté, tel que le polycarbonate.

Dans certains modes de réalisation, le panneau peut être constitué de plusieurs éléments affleurant entre eux, vus de l'extérieur. Le cas échéant, au moins un de ces éléments peut être en tout ou en partie opaque, et par exemple en métal ou en plastique. Par ailleurs, les bords d'un panneau vitré peuvent être opacifiés, par exemple par sérigraphie.

### 2. Art antérieur

Il est actuellement souhaité, dans le domaine des véhicules automobiles, de proposer de plus en plus de surfaces vitrées. En particulier, on propose régulièrement des véhicules présentant un pavillon équipé d'un ou plusieurs éléments vitrés. Dans certains cas, l'intégralité du pavillon est en verre, ou en un matériau similaire laissant passer la lumière, et notamment les rayons du soleil.

Des solutions ont également été proposées pour dégager une, voire plusieurs, ouvertures dans un tel pavillon, notamment pour former un toit ouvrant.

Le Demandeur a notamment proposé plusieurs solutions pour contrôler les mouvements d'un panneau mobile d'une baie flush ou d'un toit ouvrant flush. Ces mouvements sont généralement complexes, puisque l'ouverture du panneau mobile nécessite tout d'abord un dégagement, par rapport à l'ouverture réalisée dans la partie fixe du pavillon, puis un coulissement, au-dessus ou en dessous de la partie fixe.

Il peut également être prévu que le panneau mobile soit entrebâillant, c'est-à-dire qu'il bascule par rapport à l'un de ses bords, généralement le bord orienté vers l'avant du véhicule. Il peut aussi être nécessaire, dans certains modes de réalisation, de contrôler le déplacement d'autres éléments, tel qu'un déflecteur, qui vient guider l'air au-dessus de l'ouverture, lorsque le panneau mobile prend une position ouverte.

Le Demandeur a proposé une solution efficace, permettant de transformer un mouvement d'actionnement simple, monodirectionnel, suivant par exemple une courbe, définie par exemple par le pavillon. Pour ceci, on met en œuvre des navettes, guidées en translation le long de deux rails et pouvant être solidarisées à des câbles, par exemple du type « push/pull ».

Ces navettes contrôlent généralement une cinématique complexe, notamment à l'aide de lumières et/ou de gorges guidant des pions ou des biellettes agissant directement ou indirectement sur le panneau mobile, et, le cas échéant, sur un autre élément mobile. Ces navettes sont par exemple utilisées pour assurer le dégagement de la partie dirigée vers l'avant du panneau mobile et/ou son entrebâillement.

Il peut donc être nécessaire de désolidariser, pour certains de ces mouvements, les navettes des câbles, pour que, selon les cas, le câble « push/pull » continue son déplacement en entraînant d'autres éléments dont il est solidaire, les navettes restant immobiles, ou, inversement, de permettre que les navettes continuent leur déplacement, en étant par exemple entraînées par le déplacement du panneau mobile, alors que les câbles « push/pull » restent immobiles. Il est en conséquence nécessaire de prévoir des moyens de solidarisation/désolidarisation des navettes, par exemple sous la forme d'un crochet ou d'un élément de connexion.

Les différents éléments permettant de contrôler les différents mouvements du panneau mobile sont complexes, et doivent être assemblées avec précision. Il est donc souhaitable de proposer des solutions simples, efficaces et fiables. Il est en outre souhaitable que ces différents moyens soient peu encombrants, l'espace étant disponible étant très limité, et de poids réduit.

Le Demandeur a ainsi proposé une solution simple et efficace pour la solidarisation et la désolidarisation d'une navette avec son câble. Selon cette approche, notamment décrite dans le document de brevet WO2016008938, le déplacement du panneau mobile met donc en œuvre deux navettes guidées en translation respectivement dans deux rails, des moyens de solidarisation/désolidarisation permettant de lier ou non le déplacement de chacune desdites navettes au déplacement d'un câble d'entraînement, comprenant un élément d'accrochage mobile entre deux positions, et pouvant prendre :
- une position de solidarisation, dans laquelle il forme un angle compris entre 5 et 15° avec la direction dudit câble d'entraînement, une portion d'extrémité dudit élément d'accrochage coopérant avec un logement complémentaire dans ladite navette ;
- une position de désolidarisation, dans laquelle il s'étend sensiblement parallèlement à la direction dudit câble d'entraînement, ladite portion d'extrémité étant déplacée hors dudit logement.

Ainsi, la solidarisation est obtenue en faisant passer l'élément d'accrochage d'une position dans laquelle il est parallèle ou pratiquement parallèle au câble, et peut être déplacé dans le même canal que ce câble. Dans la position de solidarisation, cet élément d'accrochage, formant pêne, est déplacé angulairement, par rapport à l'axe du câble, pour que son extrémité vienne coopérer avec la navette, plus précisément un logement formant gâche, et que cette navette et le câble soient entraînés en même temps.

Ce déplacement angulaire peut être obtenu par des moyens de rappel, amenant l'élément d'accrochage dans la position de solidarisation en l'absence de contrainte, ou à l'aide d'une rampe fixe, qui guide progressivement la portion d'extrémité, formant pêne, vers le logement formant gâche.

Le document US2015/0048655 A1 décrit un élément d'accrochage dont le déplacement est obtenu par des moyens de rappel seulement selon une direction latérale dudit véhicule.

En pratique, cependant, cette solution présente des inconvénients, notamment en termes de fiabilité. En particulier, on constate que, dans certaines conditions, par exemple en présence d'un choc du à un défaut de la route, ou à un freinage brusque, ou encore en présence de vibrations, le pêne peut se désolidariser intempestivement de la gâche. Dans ce cas, les mouvements des différentes pièces ne sont plus assurés correctement, et il existe un risque de blocage, de détérioration et/ou de casse de celles-ci.

### 3. Exposé de l'invention

L'invention a notamment pour objectif de pallier à ces inconvénients.

Cet objectif est atteint à l'aide d'un pavillon vitré de véhicule automobile, comprenant une partie fixe dans laquelle est ménagée une ouverture, et un panneau mobile par rapport à la partie fixe, apte à obturer ladite ouverture dans une position d'obturation, le déplacement dudit panneau mobile mettant en œuvre au moins une navette guidée en translation, dans la direction longitudinale (X) dudit véhicule, respectivement dans un rail, des moyens de solidarisation / désolidarisation permettant de lier ou non le déplacement de chacune desdites navettes au déplacement d'un câble de synchronisation.

Selon l'invention, lesdits moyens de solidarisation / désolidarisation comprennent un élément d'accrochage dont une portion formant pêne est mobile au moins selon la direction latérale (Y) dudit véhicule et en hauteur (Z), entre deux positions :
- une position de solidarisation, dans laquelle ledit pêne est en prise avec un logement complémentaire dans ladite navette ;
- une position de désolidarisation, dans laquelle ledit pêne est déplacé, selon ladite direction latérale Y, hors dudit logement.

Ainsi, le contrôle de la solidarisation avec la navette est effectué de façon efficace, et résistant au solidarisation ou désolidarisation intempestive.

Les opérations de solidarisation et de désolidarisation sont ainsi plus efficaces, et les risques de déplacement intempestif est encore réduit.

Selon un mode de réalisation particulier, dans ladite position de solidarisation, une portion dudit élément d'accrochage est guidée en coulissement dans une glissière d'un guide de synchronisation, et, dans ladite position de désolidarisation, ledit élément d'accrochage est maintenu dans un état verrouillé par rapport audit guide de synchronisation.

Notamment, ledit guide de synchronisation présente une butée de blocage dudit pêne dans la position de désolidarisation, décalée selon la direction Y par rapport à ladite glissière.

Ceci assure un maintien efficace du pêne, dans la position désolidarisée.

Selon un mode de réalisation particulier, ledit guide de synchronisation présente une portion de blocage dudit élément d'accrochage dans les directions X et Y.

Selon un autre aspect particulier de l'invention, le pavillon peut comprendre des moyens de rappel agissant sur ledit élément d'accrochage de façon à le ramener et/ou le maintenir dans ledit état verrouillé.

Ceci, assure une assistance au verrouillage, d'une part, et un maintien dans l'état verrouillé, d'autre part.

Lesdits moyens de rappel peuvent par exemple comprendre une lame ressort.

Selon un autre aspect particulier de l'invention, ledit logement peut présenter au moins un plan incliné assurant un déplacement progressif dudit pêne, lorsque ladite navette est déplacée.

Notamment, ledit logement peut présenter un premier plan incliné contrôlant un déplacement dudit pêne dans ladite direction Y.

Ledit logement peut également présenter un deuxième plan incliné contrôlant un déplacement dudit pêne dans ladite direction Z.

Dans ce cas, le logement peut être formé de façon que ledit pêne rencontre successivement ledit premier plan incliné puis ledit deuxième plan incliné, lors d'un passage de ladite position de désolidarisation à ladite position de solidarisation.

Par ailleurs, ledit pêne peut présenter au moins un plan incliné complémentaire dudit premier et/ou deuxième plan incliné.

Selon un autre aspect particulier de l'invention, ledit élément d'accrochage est monté à l'extrémité d'un élément de liaison permettant de synchroniser des mouvements de la partie avant et de la partie arrière dudit panneau mobile, dans ladite position de solidarisation.

### 4. Exposé des figures

D'autres caractéristiques et avantages de l'invention apparaîtront à la lecture de la description suivante, d'un mode de réalisation particulier de l'invention, donnée à titre de simple exemple illustratif et non limitatif, illustré par les dessins annexés parmi lesquels :
- les figures 1A et 1B illustrent un exemple de toit ouvrant mettant en œuvre l'invention, respectivement dans une position fermée et une position ouverte ;
- les figures 2A à 2C illustrent, en coupe et vue de dessus, un mode de réalisation de l'invention, respectivement :

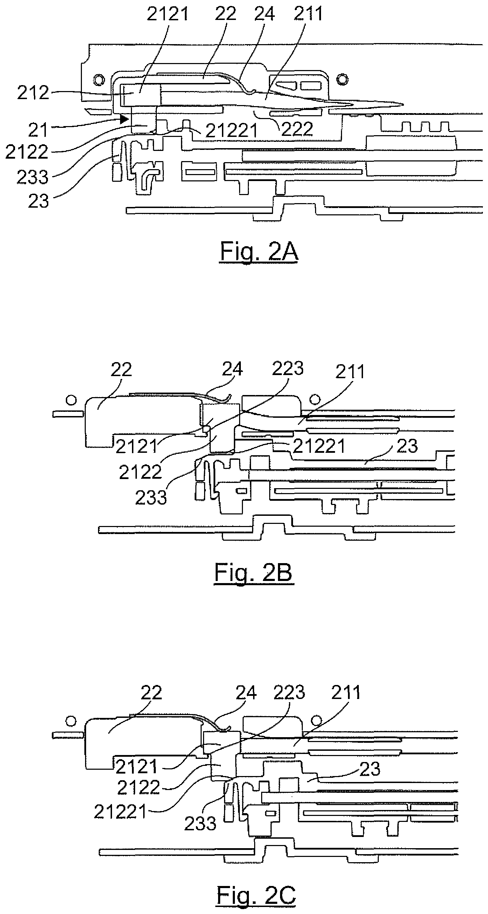

   - figure 2A : position de solidarisation, panneau mobile fermé ;
   - figure 2B : position de solidarisation, panneau mobile relevé (« tilt ») ;
   - figure 2C : position de désolidarisation, le pêne étant dans l'état bloqué ;

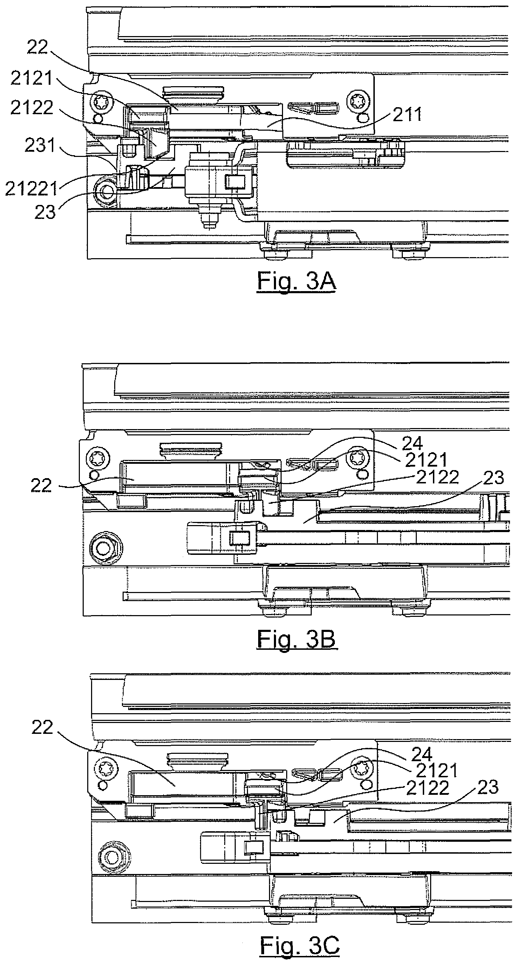

- les figures 3A à 3C présentent le mécanisme en vue de dessus, dans les positions correspondant sensiblement à celles des figures 2A à 2C ;

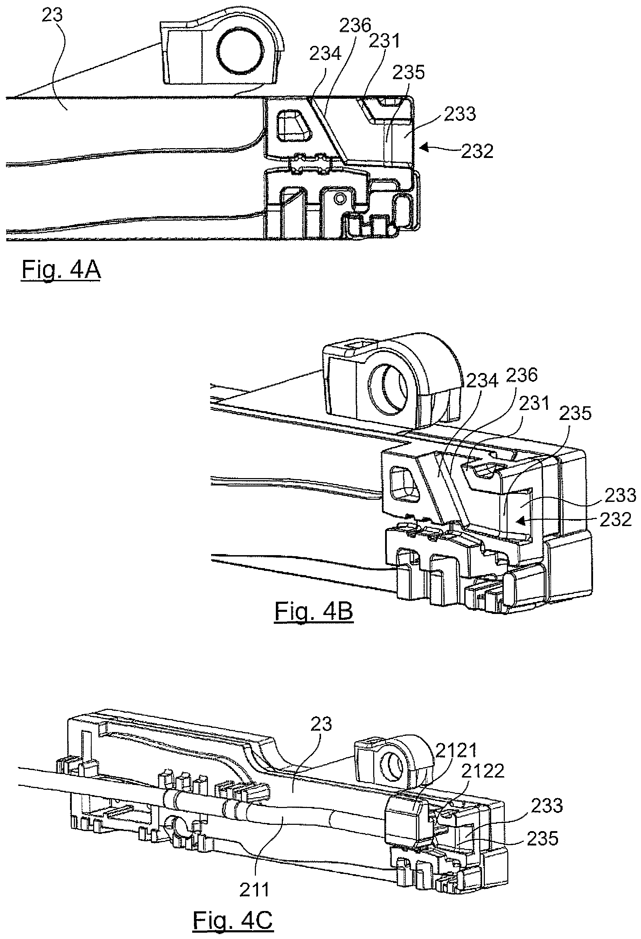

- les figures 4A à 4C sont trois vues d'un exemple de navette selon l'invention, présentant un logement coopérant avec le pêne dans la position de solidarisation, respectivement :
   - figure 4A : vue en coupe ;
   - figure 4B : vue en perspective ;
   - figure 4C : vue en perspective, l'élément d'accrochage étant représenté ;

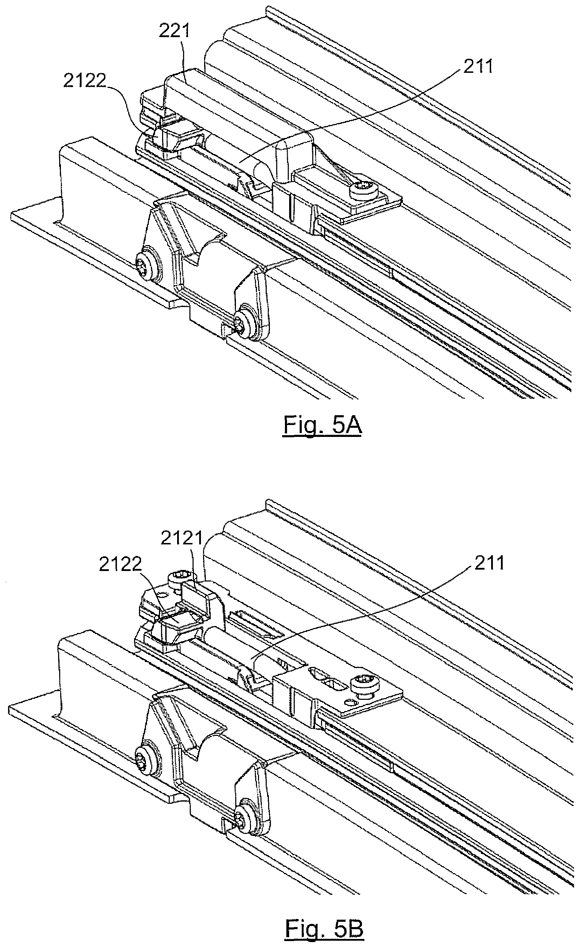

- les figures 5A et 5B illustrent le guidage de l'élément d'accrochage dans le guide de synchronisation, la partie supérieure de celui-ci étant escamotée.

### 5. Description de l'invention

### 5.1 Rappel sur le toit ouvrant

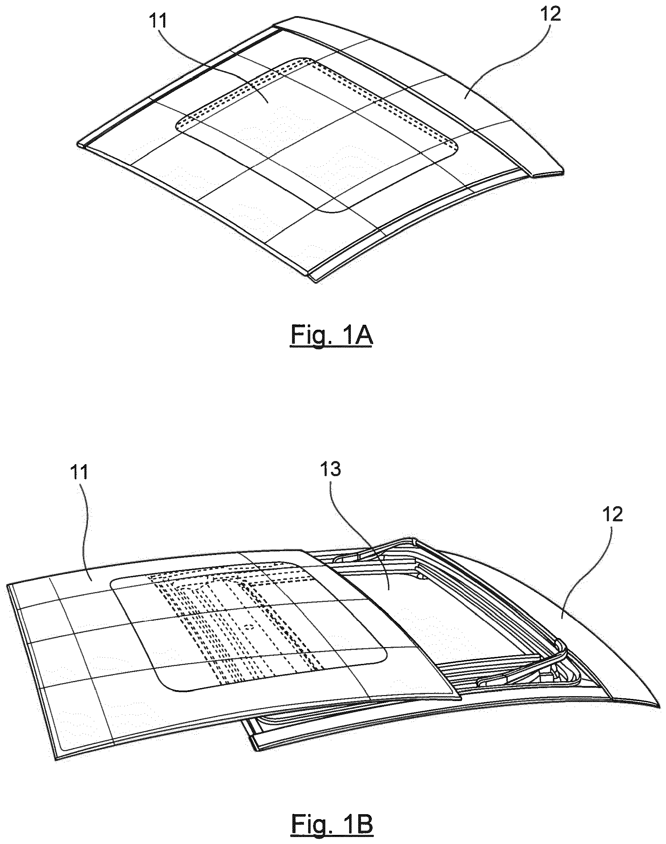

Un exemple de toit ouvrant selon l'invention est illustré sur les figures 1A et 1B. En position fermée (figure 1A), le panneau mobile 11 est affleurant avec le pavillon 12, dans lequel une ouverture 13 est ménagée.

Pour placer le panneau mobile 11 dans la position ouverte (figure 1B), il convient tout d'abord de le décaler en hauteur (« tilt »), avant de le guider en coulissement vers l'arrière du véhicule, au-dessus de la partie fixe du pavillon 12.

De tels pavillons équipés d'un panneau mobile sont connus. Selon la technique développée notamment par le Déposant de la présente demande, le mouvement complexe (« tilt » puis coulissement) du panneau mobile est contrôlé par le déplacement en coulissement d'une navette dans chacun des deux rails latéraux.

Dans un premier temps de l'ouverture, deux actionneurs, par exemple des leviers montés sur des chariots, sont entraînés par l'intermédiaire des navettes, pour assurer le louvoiement (fonction « tilt ») du panneau mobile. Lors de cette opération, les deux actionneurs sont synchronisés pour que le louvoiement s'applique simultanément ou quasi-simultanément à l'avant et à l'arrière du panneau. Ensuite, pour le déplacement en coulissement, le chariot portant le levier à l'arrière du panneau mobile est désolidarisé du mouvement de la navette, qui continue à entraîner le panneau mobile en coulissement.

Pour ceci, comme précisé en préambule et décrit dans le document de brevet WO2016008938, il est prévu un élément d'accrochage qui, dans une position de solidarisation, lie le déplacement de la navette à celui du chariot arrière, et qui, dans une position de désolidarisation, les rend indépendants l'un de l'autre. Cet élément d'accrochage présente un pêne, qui vient se solidariser avec un logement prévu à cet effet dans la navette, dans une position de solidarisation. Dans une position de désolidarisation, le pêne est dégagé du logement.

Pour conserver ci-après l'analogie avec le document de brevet WO2016008938, on précise que les fonctions de position de solidarisation et de désolidarisation sont relatives à la solidarisation du pêne, et donc du câble qui le porte, avec la navette. Ces positions correspondent respectivement à des conditions de déverrouillage et de verrouillage du pêne par rapport aux guides de synchronisation. En d'autres termes, lorsque le pêne est dans la position de désolidarisation (par rapport à la navette), il se trouve dans la position verrouillée (par rapport aux guides de synchronisation), et inversement.

On précise également que la notion de verrouillage ou de solidarisation ne correspond pas à un verrouillage du pavillon dans une position particulière, ceci étant assuré par d'autres moyens.

### 5.2 Approche de l'invention

Pour garantir un verrouillage plus efficace du pêne, qui soit insensible, ou très peu sensible, aux vibrations, aux chocs, par exemple en cas d'accident, et/ou tentatives de manipulation manuelle du panneau mobile, qui peuvent selon l'art antérieur provoquer un déverrouillage intempestif, le pêne selon l'invention est mobile selon la direction Y du véhicule (largueur du véhicule), c'est-à-dire selon une direction perpendiculaire au déplacement du panneau mobile (direction X ou longueur du véhicule), et à la hauteur du véhicule (direction Z).

Selon un mode de réalisation particulier, une lame ressort, ou un autre moyen de rappel adapté, est prévu pour maintenir le pêne dans sa position de désolidarisation (par rapport à la navette) ou verrouillé (par rapport aux guides de synchronisation). Le moyen de rappel agit sur le pêne au moins dans la direction Y, pour repousser le pêne dans son logement et le maintenir dans celui-ci. Ces moyens de rappel peuvent être dimensionnés de façon à offrir une assistance au verrouillage, sans opposer une force trop importante lors du déverrouillage.

Le logement formant gâche, dans la position verrouillée, peut être adapté pour maintenir efficacement le pêne, dans la direction Y, et, le cas échéant, dans les directions X et/ou Z.

Contrairement à la solution du document de brevet WO2016008938, qui prévoyait une rampe formant un angle prédéfini avec la direction X, le déplacement en hauteur du pêne peut être, selon un mode de réalisation de l'invention, effectué sous la forme d'une marche : un déplacement pur dans la direction Z, pour passer d'un premier niveau inférieur (position verrouillée) à un second niveau supérieur (position déverrouillée) dans laquelle le pêne se déplace dans le guide de synchronisation de façon sensiblement parallèle à la direction X, et inversement.

### 5.3 Description d'un mode de réalisation particulier

### 5.3.1 déverrouillage

Les figures 2A et 3A représentent le mécanisme selon un mode de réalisation de l'invention, lorsque le panneau mobile est fermé (figure 1A). La portion illustrée sur ces figures correspond à la partie se trouvant vers l'avant du véhicule (le panneau mobile se déplaçant lors de son ouverture, vers l'arrière du véhicule). Un seul mécanisme est illustré, correspondant à l'un des rails de guidage du panneau mobile. De préférence, un mécanisme similaire est prévu également dans le second rail.

Les moyens de solidarisation 21 sont prévus pour synchroniser le déplacement de la partie avant et de la partie arrière du panneau mobile, lors de son louvoiement (ou « tilt »), c'est-à-dire le changement de plan, du plan du pavillon à un plan s'étendant au-dessus de celui-ci, lors de l'ouverture, et inversement lors de la fermeture du panneau mobile. Pour ceci, les actionneurs avant et arrière (non représentés) sont solidarisés par un câble de synchronisation souple 211 (le cas échéant monté dans une gaine souple), qui porte à son extrémité une tête 212, présentant deux parties, un élément de guidage 2121 et un pêne 2122.

L'élément de guidage est prévu pour se déplacer dans une glissière 221 d'un guide de synchronisation 22. Le déplacement dans cette glissière correspond à l'opération de tilt.

L'ensemble du déplacement du panneau mobile est contrôlé par une navette 23, entraîné le long du rail par un câble push/pull (non représenté), et distinct du câble de synchronisation 211. Cette navette est illustrée plus en détail sur les figures 4A à 4C.

Le mécanisme, et en particulier le fait que, dans cette position, le pêne se trouve en position surélevée, sont notamment visibles sur les figures 5A et 5B.

Lorsque l'utilisateur commande l'ouverture du toit ouvrant, par exemple via une commande électrique qui entraîne en rotation un moteur entraînant le câble push/pull lié à la navette 23, celle-ci est déplacée vers la droite (selon l'orientation des figures). Le pêne 2122 est en contact avec une portion 231 de la navette (non visible sur les figures en coupe 2A à 2C du fait du plan de coupe). Le déplacement de la navette 23 vers la droite entraîne donc un déplacement dans la même direction du pêne 2122, plus généralement des moyens de solidarisation 21, la tête 2121 étant guidée dans la glissière 221 du guide de synchronisation 22. Ceci entraîne également un déplacement similaire du câble de synchronisation 211, et donc des moyens d'actionnement auxquels il est solidarisé (non représenté).

Lorsque la tête 2121 arrive à extrémité de la glissière 221, comme illustré sur les figures 2B et 3B, elle atteint un logement 222 formé dans le guide de synchronisation 22 dans lequel elle pénètre, pour prendre la position verrouillée. Ce verrouillage se fait par un déplacement dans la direction Y, et est contrôlé par une lame ressort 24, qui assure une assistance au verrouillage, en poussant la tête 2121 vers le logement 222.

Dans le même temps, ou quasiment dans le même temps, la tête 2121, et donc le pêne 2122, sont déplacés en hauteur, selon la direction Z, comme ceci apparaît plus clairement sur les figures 5A et 5B.

La navette 23 se désolidarise alors du pêne 2122, via l'ouverture 232 prévue à cet effet. Ainsi, lorsque le pêne 2122 était dans un plan supérieur, il était en contact avec la surface 231 de la navette, et donc entraîné par celle-ci lorsqu'elle était déplacée dans le plan inférieur. En revanche, lorsque la tête 2122 se trouve en regard de l'ouverture 232, et est donc désolidarisée de la navette, le déplacement de la navette vers la droite continue pour entraîner le panneau mobile en coulissement, alors que les moyens de solidarisation 21 restent immobiles.

Lorsque le verrouillage est terminé (figures 2C et 3C), la tête 2121 est maintenue immobilisée en X et en Y contre un épaulement 223 du guide de synchronisation 22, contrôlé par la lame de verrouillage 24.

### 5.3.2 déverrouillage

Lors de la fermeture du panneau mobile, l'approche inverse est mise en œuvre, et c'est la navette 23 qui pilote le déverrouillage.

Comme on le voit sur la figure 2C, la navette arrive en contact avec le pêne 2122 via un plan incliné 233, opérant avec un plan incliné 21221 complémentaire prévu à cet effet sur le pêne. Le glissement progressif de ces plans inclinés l'un contre l'autre déplace le pêne 2122, et donc la tête 2121, dans la direction Y, jusqu'à ramener cette tête en face de la glissière 221, comme illustré sur la figure 2B. Dans le même temps, ou successivement, le pêne 2122 est déplacé en hauteur, via un plan incliné 234 prévu à cet effet dans la navette 23.

En continuant son déplacement, ce plan incliné 234 de la navette entraîne en déplacement le pêne 2122 et la tête correspondante 2121, qui est guidée par la glissière 221, pour reprendre la position illustrée sur la figure 2a. Lors de ce déplacement, le câble 211 est également entraîné, et l'opération de «tilt» assurant la fermeture complète du panneau mobile est effectuée.

Comme on peut le voir sur les figures 4A à 4C, le logement de réception du pêne 2122 formé dans la navette est de forme complexe (de même que la forme du pêne 2122, qui présente des formes complémentaires).

Ce logement comprend une ouverture 232, dans laquelle le pêne 2122 est reçu, lors de la fermeture du panneau mobile (déplacement de la navette vers la gauche, sur les figures 2A à 2C). Un premier plan incliné 233 contrôle le déplacement en Y du pêne 2122. Un deuxième plan incliné 234 contrôle le déplacement du pêne 2122 en hauteur, selon la direction Z.

Dans la position illustrée sur la figure 2A, le pêne se trouve donc maintenu, dans la direction X, entre les deux plans inclinés 231 et 234.

D'autres types de guidage du pêne 2122 dans le logement correspondant de la navette peuvent bien sûrs être envisagés, pour contrôler les déplacements respectifs en fonction des besoins.

Ainsi, selon l'invention, on assure un verrouillage et un déverrouillage efficace du pêne par rapport au guide de synchronisation, sans élément complexe et/ou nombreux, tout en évitant les risques de synchronisation intempestive des parties avant et arrière, qui pourrait détériorer le mécanisme, par exemple dans certaines situations de vibrations, de chocs ou de mauvaises manipulations.

## Revendications

1. Pavillon (12) vitré de véhicule automobile, comprenant une partie fixe dans laquelle est ménagée une ouverture, et un panneau mobile (11) par rapport à la partie fixe, apte à obturer ladite ouverture dans une position d'obturation, le déplacement dudit panneau mobile mettant en œuvre au moins une navette (23) guidées en translation, dans la direction longitudinale (X) dudit véhicule, respectivement dans un rail, des moyens de solidarisation / désolidarisation (21) permettant de lier ou non le déplacement de chacune desdites navettes au déplacement d'un câble de synchronisation (211), **caractérisé en ce que** lesdits moyens de solidarisation / désolidarisation (21) comprennent un élément d'accrochage (212) dont une portion formant pêne (2122) est mobile au moins selon la direction latérale (Y) dudit véhicule et en hauteur (Z), entre deux positions :
- une position de solidarisation, dans laquelle ledit pêne (2122) est en prise avec un logement complémentaire dans ladite navette (23);
- une position de désolidarisation, dans laquelle ledit pêne (2122) est déplacé, selon ladite direction latérale Y, hors dudit logement.

2. Pavillon vitré selon la revendication 1, **caractérisé en ce que**, dans ladite position de solidarisation, une portion dudit élément d'accrochage est guidée en coulissement dans une glissière (221) d'un guide de synchronisation (22), et ce que, dans ladite position de désolidarisation, ledit élément d'accrochage est maintenu dans un état verrouillé par rapport audit guide de synchronisation.

3. Pavillon selon la revendication 2, **caractérisé en ce que** ledit guide de synchronisation (22) présente une butée de blocage dudit pêne (2122) dans la position de désolidarisation, décalée selon la direction Y par rapport à ladite glissière.

4. Pavillon selon la revendication 3, **caractérisé en ce que** ledit guide de synchronisation (22) présente une portion de blocage (223) dudit élément d'accrochage (212) dans les directions X et Y.

5. Pavillon selon la revendication 1, **caractérisé en ce qu'**il comprend des moyens de rappel (24) agissant sur ledit élément d'accrochage de façon à le ramener et/ou le maintenir dans ledit état verrouillé.

6. Pavillon selon la revendication 5, **caractérisé en ce que** lesdits moyens de rappel (24) comprennent une lame ressort.

7. Pavillon selon la revendication 1, **caractérisé en ce que** ledit logement présente au moins un plan incliné (233, 234) assurant un déplacement progressif dudit pêne, lorsque ladite navette est déplacée.

8. Pavillon vitré selon la revendication 3, **caractérisé en ce que** ledit logement présente un premier plan incliné (233) contrôlant un déplacement dudit pêne dans ladite direction Y.

9. Pavillon vitré selon la revendication 1, **caractérisé en ce que** ledit logement présente un deuxième plan incliné (234) contrôlant un déplacement dudit pêne dans ladite direction Z.

10. Pavillon selon les revendications 8 et 9, **caractérisé en ce que** ledit pêne (2122) rencontre successivement ledit premier plan incliné (233) puis ledit deuxième plan incliné, incliné (234), lors d'un passage de ladite position de désolidarisation à ladite position de solidarisation.

11. Pavillon selon l'une quelconque des revendications 7 à 10, **caractérisé en ce que** ledit pêne (2122) présente au moins un plan incliné complémentaire (21221) dudit premier et/ou deuxième plan incliné.

12. Pavillon selon la revendication 1, **caractérisé en ce que** ledit élément d'accrochage (212) est monté à l'extrémité d'un élément de liaison permettant de synchroniser des mouvements de la partie avant et de la partie arrière dudit panneau mobile, dans ladite position de solidarisation.

## Patentansprüche

1. Glasdach (12) eines Kraftfahrzeugs, umfassend einen festen Teil, in dem eine Öffnung vorgesehen ist, und ein in Bezug zum festen Teil bewegliches Paneel (11), das geeignet ist, die Öffnung in einer Verschlussposition zu verschließen, wobei die Verschiebung der beweglichen Platte mindestens ein in Translation in Längsrichtung (X) des Fahrzeugs jeweils in einer Schiene geführtes Verschlussteil (23) einsetzt, Verbindungs-/Freigabemittel (21), die es ermöglichen, die Verschiebung jedes der Verschlussteile mit der Verschiebung eines Synchronisationsseils (211) zu verbinden oder nicht, **dadurch gekennzeichnet, dass** die Verbindungs-/Freigabemittel (21) ein Befestigungselement (212) umfassen, dessen einen Bolzen (2122) bildender Abschnitt mindestens entlang der seitlichen Richtung (Y) des Fahrzeugs und in der Höhe (Z) zwischen zwei Positionen beweglich ist:
- einer Verbindungsposition, in der der Bolzen (2122) mit einer komplementären Aufnahme in dem Verschlussteil (23) in Eingriff ist;
- einer Freigabeposition, in der der Bolzen (2122) in seitliche Richtung Y aus der Aufnahme hinaus verschoben wird.

2. Glasdach nach Anspruch 1, **dadurch gekennzeichnet, dass** in der Verbindungsposition ein Abschnitt des Befestigungselements gleitend in einer Gleitschiene (221) einer Synchronisationsführung (22) geführt wird, und dass in der Freigabeposition das Befestigungselement in einem verriegelten Zustand in Bezug zur Synchronisationsführung gehalten wird.

3. Glasdach nach Anspruch 2, **dadurch gekennzeichnet, dass** die Synchronisationsführung (22) einen Anschlag zum Blockieren des Bolzens (2122) in der Freigabeposition umfasst, der in Y-Richtung in Bezug zur Gleitschiene versetzt ist.

4. Glasdach nach Anspruch 3, **dadurch gekennzeichnet, dass** die Synchronisationsführung (22) einen Abschnitt (223) zum Blockieren des Befestigungselements (212) in X- und Y-Richtung aufweist.

5. Glasdach nach Anspruch 1, **dadurch gekennzeichnet, dass** es Rückstellmittel (24) umfasst, die auf das Befestigungselement einwirken, um es in den verriegelten Zustand zurückzuführen und/oder in diesem zu halten.

6. Glasdach nach Anspruch 5, **dadurch gekennzeichnet, dass** die Rückstellmittel (24) ein Federblatt umfassen.

7. Glasdach nach Anspruch 1, **dadurch gekennzeichnet, dass** die Aufnahme mindestens eine geneigte Ebene (233, 234) aufweist, die eine fortschreitende Verschiebung des Bolzens gewährleistet, wenn das Verschlussteil verschoben wird.

8. Glasdach nach Anspruch 3, **dadurch gekennzeichnet, dass** die Aufnahme eine erste geneigte Ebene (233) aufweist, die eine Verschiebung des Bolzens in Y-Richtung steuert.

9. Glasdach nach Anspruch 1, **dadurch gekennzeichnet, dass** die Aufnahme eine zweite geneigte Ebene (234) aufweist, die eine Verschiebung des Bolzens in Z-Richtung steuert.

10. Glasdach nach den Ansprüchen 8 und 9, **dadurch gekennzeichnet, dass** der Bolzen (2122) nacheinander auf die erste geneigte Ebene (233), dann auf die zweite geneigte Ebene (234) bei einem Übergang von der Freigabeposition in die Verbindungsposition trifft.

11. Glasdach nach einem der Ansprüche 7 bis 10, **dadurch gekennzeichnet, dass** der Bolzen (2122) mindestens eine komplementäre geneigte Ebene (21221) zu der ersten und/oder zweiten geneigten Ebene aufweist.

12. Glasdach nach Anspruch 1, **dadurch gekennzeichnet, dass** das Befestigungselement (212) am Ende eines Verbindungselements montiert ist, das es ermöglicht, den vorderen Teil und den hinteren Teil des beweglichen Paneels in der Verbindungsposition zu synchronisieren.

## Claims

1. Glazed roof (12) of a motor vehicle, comprising a fixed part in which an opening is formed, and a movable panel (11) relative to the fixed part and capable of closing said opening in a closed position, the movement of said movable panel using at least one shuttle (23) guided in translation, in the longitudinal direction (X) of said vehicle, respectively in a rail, securing/releasing means (21) making it possible to optionally link the movement of each of said shuttles to the movement of a synchronisation cable (211), **characterised in that** said securing/releasing means (21) comprise an attachment element (212) in which a portion forming a bolt (2122) is mobile, at least in a lateral direction (Y) and in height (Z), between two positions:
- a securing position, in which said bolt (2122) engages with a complementary recess in said shuttle (23);
- a releasing position, in which said bolt (2122) is moved, in the lateral direction Y, out of said recess.

2. Glazed roof according to claim 1, **characterised in that**, in said securing position, a portion of said attachment element is slidably guided in a slide (221) of a synchronisation guide (22), and **in that**, in said releasing position, said attachment element is kept in a locked state with respect to said synchronisation guide.

3. Roof according to claim 2, **characterised in that** said synchronisation guide (22) has a stop for blocking said bolt (2122) in the releasing position, said stop being offset in the Y direction relative to said slide.

4. Roof according to claim 3, **characterised in that** said synchronisation guide (22) has a portion for blocking (223) said attachment element (212) in the X and Y directions.

5. Roof according to claim 1, **characterised in that** it comprises return means (24) which act on said attachment element so as to bring it back to and/or keep it in said locked state.

6. Roof according to claim 5, **characterised in that** said return means (24) comprise a leaf spring.

7. Roof according to claim 1, **characterised in that** said recess has at least one inclined plane (233, 234) which ensures a gradual movement of said bolt when said shuttle is moved.

8. Glazed roof according to claim 3, **characterised in that** said recess has a first inclined plane (233) which controls a movement of said bolt in the Y direction.

9. Glazed roof according to claim 1, **characterised in that** said recess has a second inclined plane (234) which controls a movement of said bolt in the Z direction.

10. Roof according to claims 8 and 9, **characterised in that** said bolt (2122) successively meets said first inclined plane (233) and then said second inclined plane (234) when switching from said releasing position to said securing position.

11. Roof according to any one of claims 7 to 10, **characterised in that** said bolt (2122) has at least one inclined plane (21221) which is complementary to said first and/or second inclined plane.

12. Roof according to claim 1, **characterised in that** said attachment element (212) is mounted at the end of a connecting element making it possible to synchronise movements of the front part and of the rear part of said movable panel in the securing position.
